# EUROPÄISCHE PATENTANMELDUNG

(11) **EP 4 461 143 A1**
(43) Veröffentlichungstag der Anmeldung: **13.11.2024**
(21) Anmeldenummer: 24159264.1
(22) Anmeldetag: 23.02.2024
(51) Int. Cl.: A23L 3/04, B08B 3/00, B67C 3/02, B67C 3/22

(54) **ABFÜLLLINIE SOWIE VERFAHREN ZUR WÄRME- UND/ODER KÄLTEVERSORGUNG EINER WASCHMASCHINE UND EINES PASTEURS DER ABFÜLLLINIE**

(30) Priorität: 09.05.2023 DE 102023112140
(71) Anmelder: Krones AG, 93073 Neutraubling (DE)
(72) Erfinder: LUECKE, Jens, 93073 Neutraubling (DE); CLAUSEN, Niels, 93073 Neutraubling (DE); DEPNER, Christian, 93073 Neutraubling (DE); WINKELMANN, Carsten, 93073 Neutraubling (DE); HUFENBACH, Tim, 93073 Neutraubling (DE); WEYERS, Alexander Bruno, 93073 Neutraubling (DE); SOERENSEN, Matthias, 93073 Neutraubling (DE)
(74) Vertreter: Grünecker Patent- und Rechtsanwälte PartG mbB

(57) **Zusammenfassung**

Abfülllinie (1) mit einer Waschmaschine (2) zum Reinigen leerer Flaschen, einem Pasteur (3) zum Pasteurisieren mit einem flüssigen Produkt gefüllter Flaschen und einem flüssigkeitsführenden Wärmetauschkreis (4), sowie Verfahren zur Wärme- und/oder Kälteversorgung der Waschmaschine (2) und des Pasteurs (3). Dadurch, dass der Wärmetauschkreis (4) die Waschmaschine (2) und den Pasteur (3) zum Wärmetausch zwischen einer ersten Flüssigkeit (6) zur Wärme- und/oder Kälteversorgung der Waschmaschine und einer zweiten Flüssigkeit (7) zur Wärme- und/oder Kälteversorgung des Pasteurs verbindet, kann die Waschmaschine (2) als Wärme- und/oder Kältespeicher für den Pasteur (3) verwendet werden und einen vergleichsweise flexiblen und effizienten Anlagenbetrieb ermöglichen.

## Beschreibung

Die Erfindung betrifft eine Abfülllinie mit einer Waschmaschine, einen Pasteur und einen diese verbindenden Wärmetauschkreis sowie ein Verfahren zur Wärme- und/oder Kälteversorgung der Waschmaschine und des Pasteurs.

Bekanntermaßen können Wärmepumpen zur Wärme- und/oder Kälteversorgung von Flaschenwaschmaschinen und/oder Pasteuren wie beispielsweise Tunnelpasteuren von Abfülllinien verwendet werden. Kombination von Wärmepumpen und Flaschenwaschmaschinen sind beispielsweise aus der DE 35 12 463 C2, DE 10 2016 218 885 A1, DE 10 2016 206 185 A1 und DE 10 2013 114 607 A1 bekannt. Entsprechende Kombinationen von Wärmepumpen mit Pasteuren sind beispielsweise aus der EP 2 114 465 B1, DE 10 2007 003 919 A1, EP 3 068 237 und DE 10 2019 133 184 A1 bekannt.

Demgegenüber besteht jedoch weiterhin Verbesserungsbedarf hinsichtlich der Energieeffizienz solcher Anlagen insbesondere bei Lastwechseln, wie beispielsweise der Inbetriebnahme, Außerbetriebnahme von Pasteuren, beispielsweise zum Produktwechsel oder im Allgemeinen für einen Stopp-and-Go-Betrieb. Auch wäre es zur Reduzierung des Instandhaltungsaufwands von Wärmepumpen wünschenswert, diese möglichst gleichmäßig zu betreiben.

Wenigstens eine der gestellten Aufgaben wird mit einer Abfülllinie nach Anspruch 1 und mit einem Verfahren nach Anspruch 9 gelöst. Vorteilhafte Ausführungsformen sind in den Unteransprüchen angegeben.

Die Abfülllinie umfasst eine Waschmaschine zum Reinigen leerer Flaschen, einen Pasteur zum Pasteurisieren mit einem flüssigen Produkt gefüllter Flaschen und einen flüssigkeitsführenden Wärmetauschkreis, der die Waschmaschine und den Pasteur zum Wärmetausch zwischen einer ersten Flüssigkeit zur Wärme- und/oder Kälteversorgung der Waschmaschine und einer zweiten Flüssigkeit zur Wärme- und/oder Kälteversorgung des Pasteurs verbindet.

Die erste Flüssigkeit ist beispielsweise eine durch die Waschmaschine geführte (erste) Prozessflüssigkeit, wie Reinigungsflüssigkeit (z.B. Lauge, Säure oder Spülwasser) oder Spritzwasser, oder steht mit einer solchen in Wärmeaustausch (dann im Sinne von Heiz- oder Kühlwasser für die erste Prozessflüssigkeit). Die zweite Flüssigkeit ist beispielsweise eine durch den Pasteur geführte (zweite) Prozessflüssigkeit, wie Heiz- oder Kühlwasser (für die gefüllten Flaschen).

Es ist dann möglich, die Waschmaschine als Wärmequelle oder Wärmesenke für den Pasteur einzusetzen, insbesondere beim Leerfahren des Pasteurs oder bei dessen Wiederanfahren, beispielsweise zum Zwecke eines Produktwechsels oder allgemein bei Start/Stopp, z.B. aufgrund eines fremdinduzierten Stopps des Pasteurs, wenn beispielsweise beim nachgeschalteten Verpacken Fehler auftreten.

Die Erfindung macht sich die Erkenntnis zunutze, dass in der Waschmaschine vergleichsweise große Volumina der ersten Flüssigkeit oder einer von dieser temperierten (ersten) Prozessflüssigkeit, wie beispielsweise Lauge, zirkulieren und der Bereich zulässiger Arbeitstemperaturen der (ersten) Prozessflüssigkeit / ersten Flüssigkeit relativ groß ist. Somit kann mittels der ersten Flüssigkeit relativ viel Wärme in der Waschmaschine gepuffert werden kann. Das heißt, Wärme wird zunächst gespeichert und dann wieder abgegeben oder in der Waschmaschine verbraucht. Auf dieser Grundlage können die in engeren Grenzen vorgegebenen Behandlungstemperaturen in einzelnen Zonen des Pasteurs unter Minimierung von Wärmeverlusten eingehalten werden. Beispielsweise kann Wärme- und/oder Kältebedarf des Pasteurs bei Lastwechseln zumindest anteilig durch Wärmetausch mit der ersten Flüssigkeit gedeckt werden, ohne den für die Behandlung von Leerflaschen in der Waschmaschine zulässigen Temperaturbereich der zweiten Flüssigkeit oder einer damit durch Wärmetausch temperierten (zweiten) Prozessflüssigkeit zu über- oder unterschreiten.

Vorzugsweise umfasst der Wärmetauschkreis wenigstens eine Wärmepumpe für den Wärmetausch zwischen erster und zweiter Flüssigkeit. Die Wärmepumpe ist beispielsweise eine Flüssig-Flüssig-Kompressionswärmepumpe (Industriewärmepumpe). Geeignet ist z.B. eine Wasser-Wasser-Kompressionswärmepumpe. Die erste Flüssigkeit ist dann der Kondensatorseite der Wärmepumpe und die zweite Flüssigkeit deren Verdampferseite zugeordnet oder umgekehrt, gegebenenfalls auch wechselweise je nach Betriebszustand.

Der Wärmetausch zwischen der ersten und der zweiten Flüssigkeit kann ergänzend, oder im einfachsten Fall auch alternativ zur Wärmepumpe, über wenigstens einen passiven Wärmetauscher erfolgen.

Besonders vorteilhaft ist eine Verschaltung des Wärmetauschkreises derart, dass die Wärmepumpe im Nennbetrieb der Abfülllinie Wärmeenergie und Kälteenergie wahlweise nur für die Waschmaschine, nur für den Pasteur oder im Austausch zwischen Waschmaschine und Pasteur bereitstellen kann. Dies ermöglicht einen weitgehend kontinuierlichen Betrieb der Wärmepumpe, beispielsweise indem deren Kondensatorseite und Verdampferseite wahlweise der Waschmaschine und/oder dem Pasteur zugeordnet werden kann. Hierfür kann eine erste Seite des Wärmetauschkreises, in der die erste Flüssigkeit geführt wird, und eine zweite Seite des Wärmetauschkreises, in dem die zweite Flüssigkeit geführt wird, durch umschaltbare Leitungsführung wahlweise an die Kondensatorseite oder Verdampferseite der Wärmepumpe angeschlossen werden. Alternativ könnte die Wärmepumpe im Nennbetrieb auch nur dem Pasteur zugeordnet sein.

Eine derartige Verschaltung des Wärmetauschkreises ermöglicht den Einsatz der Waschmaschine wahlweise als Wärmequelle oder Wärmesenke für den Pasteur oder eine in den Wärmetauschkreis integrierte Wärmepumpe.

Die erste Flüssigkeit kann beispielsweise ein Hauptlaugebad der Waschmaschine durchströmen oder mit einem solchen im Wärmeaustausch stehen. Die zweite Flüssigkeit kann beispielsweise eine Pasteurisierungszone zur Pasteurisierung der Flaschen oder eine Auslaufzone zu deren anschließenden Kühlung durchlaufen und/oder mit einer solchen im Wärmeaustausch stehen.

Ein besonders vorteilhaftes Speicherverhalten der Waschmaschine ergibt sich, falls diese ein Speichervolumen von wenigstens 20 m³ für die erste Flüssigkeit oder eine damit temperierte (erste) Prozessflüssigkeit aufweist. Vorteilhaft ist dann ferner, wenn für die erste Flüssigkeit bzw. Prozessflüssigkeit eine Über- oder Untertemperatur der Behandlung von maximal 10 K und insbesondere maximal 5 K zulässig ist.

Beispielsweise kann die Übertemperatur oder Untertemperatur der ersten Flüssigkeit / Prozessflüssigkeit dann auf vorteilhafte Weise im Betrieb der Abfülllinie abgebaut werden, indem die Leerflaschen mit der ersten Flüssigkeit in der Waschmaschine behandelt werden, Wärme mit der zweiten Flüssigkeit getauscht wird und diese im Pasteur verwendet wird und/oder Wärme mit einer dritten Flüssigkeit ausgetauscht wird, die Wärme oder Kälte zu einem anderen Verbraucher oder Speicher der Abfülllinie transportiert.

Bevorzugte Ausführungsformen der Erfindung sind zeichnerisch dargestellt. Es zeigen:
- Figur 1: eine schematische Darstellung einer Abfülllinie;
- Figur 2: ein Fließbild einer Ausführungsform des Wärmetauschkreises;
- Figur 3: ein Fließbild einer alternativen Ausführungsform des Wärmetauschkreises;
- Figur 4: ein Fließbild einer weiteren Ausführungsform des Wärmetauschkreises;
- Figur 5A-5C: Betriebszustände einer Ausführungsform des Wärmetauschkreises; und
- Figur 6A-6C: Betriebszustände einer alternativen Ausführungsform des Wärmetauschkreises.

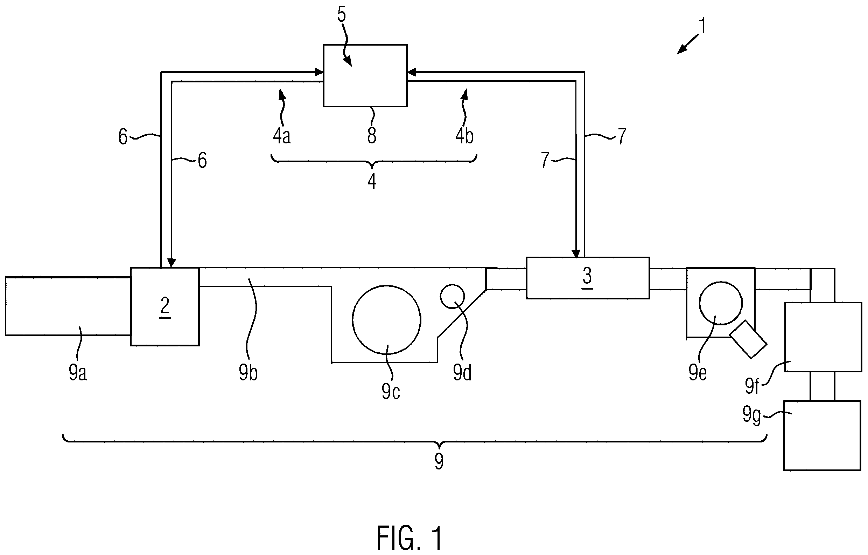

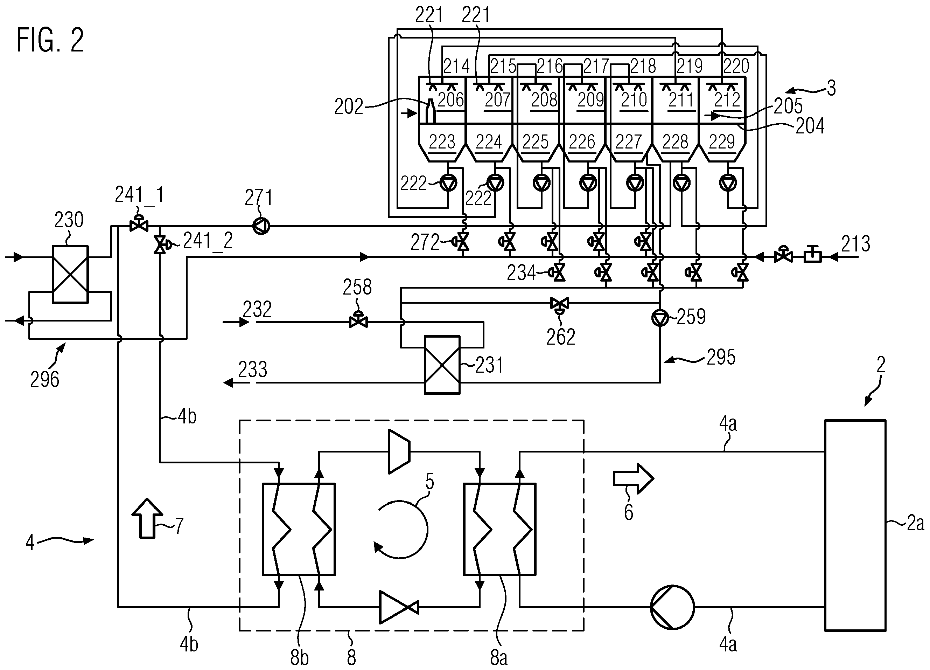

Wie die Figur 1 erkennen lässt, umfasst die Abfülllinie 1 wenigstens eine Waschmaschine 2 zum Reinigen leerer Flaschen (nicht dargestellt), einen Pasteur 3 zum Pasteurisieren der mit einem flüssigen Produkt gefüllten Flaschen (eine davon in den Figuren 2 bis 4 schematisch angedeutet) und einen Wärmetauschkreis 4, der die Waschmaschine 2 und den Pasteur 3 zum Wärmetausch 5 zwischen einer zur Wärme- und/oder Kälteversorgung der Waschmaschine 2 zu dieser und insbesondere durch diese geführten ersten Flüssigkeit 6 und einer zur Wärme- und/oder Kälteversorgung des Pasteurs 3 zu diesem und insbesondere durch diesen geführten zweiten Flüssigkeit 7 verbindet.

Die erste Flüssigkeit 6 zirkuliert demnach durch eine erste Seite 4a des Wärmetauschkreises 4, die zweite Flüssigkeit 7 zirkuliert durch eine zweite Seite 4b des Wärmetauschkreises 4.

Die erste Flüssigkeit 6 kann eine in der Waschmaschine 2 verwendete Prozessflüssigkeit sein, beispielsweise eine Lauge, insbesondere Hauptlauge, oder Spritzwasser. Die zweite Flüssigkeit 7 kann eine im Pasteur 3 verwendete Prozessflüssigkeit sein, beispielsweise Heizwasser oder Kühlwasser. Bei der ersten und/oder zweiten Flüssigkeit 6, 7 kann es sich stattdessen auch um herkömmliches Brauchwasser oder Kühlwasser zum Wärme-/ Kältetransport zur Waschmaschine 2 bzw. zum Pasteur 3 handeln zum Wärmetausch mit einer dort verwendeten Prozessflüssigkeit.

Der Wärmetausch 5 zwischen der ersten und zweiten Flüssigkeit 6, 7 erfolgt vorzugsweise in wenigstens einer Wärmepumpe 8 (u. a. mit einem Kondensator 8a und einem Verdampfer 8b, jeweils nicht separat dargestellt). Alternativ oder ergänzend ist auch passiver Wärmetausch 5 möglich, also indem die wärmere der Flüssigkeiten 6, 7 Wärme an die jeweils kältere abgibt. Dies ist bei geeigneten Temperaturniveaus der ersten und zweiten Flüssigkeit 6, 7 prinzipiell denkbar. Besonders vorteilhaft sind jedoch die beschriebenen Ausführungsformen mit der wenigstens einen Wärmepumpe 8.

Beispiele für die mögliche Verschaltung des Wärmetauschkreises 4 mittels prinzipiell bekannter Elemente wie Rohrleitungen, Abzweige, Ventile, Stellantriebe oder dergleichen sind in den Figu-ren 2 bis 4 mit in RI-Fließbildern gebräuchlichen Symbolen dargestellt.

Die beschriebenen Funktionen zur Wärme- und/oder Kälteversorgung der Waschmaschine 2 und des Pasteurs 3 können durch geeignete Verschaltung und gegebenenfalls wahlweise Anbindung der ersten und zweiten Seite 4a, 4b des Wärmetauschkreises 4 an die jeweilige Kondensatorseite und Verdampferseite der wenigstens einen Wärmepumpe 8 erzielt werden.

Wie die Figur 1 ferner erkennen lässt, kann die Abfülllinie 1 weitere prinzipiell bekannte Anlagenkomponenten 9 umfassen, wie beispielsweise eine Leergutsortieranlage 9a, einen Bandförderer 9b, einen Füller 9c, einen Verschließer 9d, einen Etikettierer 9e, einen Packer 9f und/oder einen Palettierer 9g, gegebenenfalls auch einen Rinser (nicht dargestellt).

Wie die Figur 2 erkennen lässt, kann die Wärmepumpe 8 im einfachsten Fall permanent mit der ersten und zweiten Seite 4a, 4b des Wärmetauschkreises 4 verbunden sein. Die Wärmepumpe 8 arbeitet hier bei durch den Kondensator 8a der Wärmepumpe 8 zirkulierender erster Flüssigkeit 6 und durch den Verdampfer 8b der Wärmepumpe 8 zirkulierender zweiter Flüssigkeit 7 als Wärmesenke für den Pasteur 3 und als Wärmequelle für die Waschmaschine 2. Die erste Flüssigkeit 6 kann beispielsweise einen Laugebad-Erhitzer (Wärmetauscher) 2a der Waschmaschine 2 durchströmen und dadurch eine in der Waschmaschine 2 verwendete Lauge (Prozessflüssigkeit) erwärmen.

Durch den Pasteur 3 werden die Behältnisse 202 mittels eines Fördermittels 204, beispielsweise eines Förderbands, in einer Förderrichtung 205 durch mehrere aufeinanderfolgende Zonen 206, 207, 208, 209, 210, 211, 212 transportiert. Bei dem in der Figur 2 dargestellten ersten Ausführungsbeispiel sind in der Förderrichtung 205 zunächst zwei Anwärmzonen 206, 207, dann drei Pasteurisierungszonen 208, 209, 210 und schließlich zwei Abkühlzonen 211, 212 vorgesehen. Anstatt des Tunnelpasteurs kann auch ein anderer Pasteur-Typ vorgesehen sein, der aufeinanderfolgende Anwärm-, Pasteurisierungs- und Abkühlzonen umfasst, sowie zugeordnete Berieselungsvorrichtungen und Sammelbereiche.

Nach Durchrieseln einer jeweiligen Zone 206-212 kann die Prozessflüssigkeit 213 in einem Sammelbereich 223, 224, 225, 226, 227, 228, 229, der jeweiligen Zone 26 - 212 zugeordnet ist, aufgefangen und zur weiteren Verwendung aus dem Sammelbereich 223 - 229 abgeführt werden. Die Sammelbereiche 223 - 229 sind hierbei unterhalb der jeweiligen Zonen 26 - 212 angeordnet. Zur weiteren Verwendung der Prozessflüssigkeit sind die jeweiligen Ansaugseiten der jeweiligen Pumpe 222 über Leitungen mit den entsprechenden Sammelbereichen 223 - 229 leitungsverbunden, um zumindest Teilmengen der Prozessflüssigkeit 213 aus den entsprechenden Sammelbereichen 223 - 229 wieder einer der zugeordneten, d.h. leitungsverbundenen Zonen 206 - 212 zuzuführen. Wie in der Figur 2 dargestellt, kann es hierbei zweckmäßig sein, wenn der Sammelbereich 223 der ersten Anwärmzone 206 eingangsseitig mit der Pumpe 222 leitungsverbunden ist, und die Pumpe 222 ausgangsseitig mit der Berieselungsvorrichtung 221 der zweiten Abkühlzone 212 leitungsverbunden ist. Dies kann zweckmäßig sein, da sich die Prozessflüssigkeit 213 in der ersten Anwärmzone 206 durch Wärmeaufnahme der Behältnisse 202 bzw. Lebensmittel/Getränke in den Behältnissen 202 abkühlt, und nach Durchrieseln der ersten Anwärmzone 206 das Prozesswasser 213, das sich im Sammelbereich 223 ansammelt, eine zum Abkühlen der Behältnisse 202 in der zweiten Abkühlzone 212 geeignete Temperatur aufweisen kann.

Da sich in der zweiten Abkühlzone 212 die durch die Berieselungsvorrichtung 220 ausgebrachte Prozessflüssigkeit 213 durch Wärmeabgabe der Behältnisse 202 bzw. Lebensmittel/Getränke erwärmt und nach Durchrieseln der zweiten Abkühlzone 212 das Prozesswasser 213, das sich im Sammelbereich 229 ansammelt, eine zum Erwärmen der Behältnisse 202 in der ersten Anwärmzone 206 geeignete Temperatur aufweisen kann, ist es zweckmäßig, die Prozessflüssigkeit 213 aus dem Sammelbereich 229 der zweiten Abkühlzone 212 der Berieselungsvorrichtung 214 der ersten Anwärmzone 26 zuzuführen, wie dies auch in der Figur 2 schematisch dargestellt ist.

Wie in der Figur 2 dargestellt, können die den Pasteurisierungszonen 208 - 210 zugeordneten Pumpen 222 weiter zur zumindest teilweisen Rückförderung der Prozessflüssigkeit 213 aus dem Sammelraum 225 zu der Berieselungsvorrichtung 216, aus dem Sammelraum 226 zu der Berieselungsvorrichtung 217 und aus dem Sammelraum 227 zu der Berieselungsvorrichtung 218 vorgesehen sein. Somit kann zumindest eine Teilmenge der Prozessflüssigkeit 213 im Kreis um die Pasteurisierungszonen 208 - 210 geführt werden.

In der Anlage ist für ein Erwärmen der Prozessflüssigkeit 213 zudem ein erster Wärmetauscher (WT) 231 vorgesehen, in den Dampf 232 eingebracht und als Kondensat 233 ausgebracht wird, nachdem der Dampf 232 im Gegenstrom zur Prozessflüssigkeit 213 geflossen ist, die aus dem Sammelbereich 227 der letzten Pasteurisierungszone 210 stammt. Die Menge des eingebrachten Dampfs 232 ist mittels einer Dosiervorrichtung 258 steuerbar. Die Prozessflüssigkeit 213 aus dem Sammelbereich 227 wird dem ersten WT 231 mittels einer Pumpe 259 über ein druckgeschlossenes Anwärmleitungssystem 295 zugeführt und verlässt, nach der Erwärmung durch den im Gegenlauf transportierten Dampf 322, den ersten WT 231 und gelangt wieder in das Anwärmleitungssystem 295. Die in dem ersten WT 231 erhitzte Prozessflüssigkeit 213 kann bei Bedarf mittels Dosiervorrichtungen 234 den Zonen 206 - 210 über die den Zonen 206 - 210 zugeordneten Berieselungsvorrichtungen 214 -218 zugeführt werden. Zusätzlich oder alternativ kann die erhitzte Prozessflüssigkeit 213 oder ein Teil davon auch im Kreis durch den ersten WT 231 geführt werden, wobei die Durchflussmenge mittels einer Dosiervorrichtung 262 in dem Anwärmleitungssystem 295 steuerbar ist. Das Anwärmleitungssystem 295 ist als druckgeschlossenes System ausgebildet und wird mit einem Überdruck gegenüber dem Umgebungsdruck betrieben, beispielsweise mit einem Überdruck von 2·10⁵ Pa.

Des Weiteren ist in der Anlage vorgesehen, dass wenigstens Teilmengen der in dem Sammelbereich 228 der ersten Abkühlzone 211 enthaltenen Prozessflüssigkeit 213 anstatt wieder zu der Berieselungsvorrichtung 215 der zweiten Anwärmzone 207 zurückgepumpt zu werden, einem zweiten WT 230 zugeführt werden. Der zweite WT 230 kann mit einer Kühlanlage, wie einem Kühlturm, gekoppelt sein, um die Prozessflüssigkeit 213 aus dem Sammelbereich 228 zu kühlen und ist dazu mit dem einen Sammelbereich 228 der ersten Abkühlzone 211 und Zuläufen zu den Berieselungsvorrichtungen 219, 220 der ersten 211 und zweiten Abkühlzone 212 über ein druckgeschlossenes Abkühlleitungssystem 296 leitungsverbunden. Von dem Sammelbereich 228 wird die Prozessflüssigkeit 213 mittels einer ersten Pumpe 271 und einer Dosiervorrichtung 241_1 über das Abkühlleitungssystem 96 dem zweiten WT 230 zugeführt und verlässt den zweiten WT 230 nach dem Abkühlen. Für das Abkühlen der Prozessflüssigkeit 213 in dem zweiten WT 230 wird ein Kühlmittel der Kühlanlage dem zweiten WT 230 eingebracht, fließt im Gegenlauf zu der Prozessflüssigkeit 213 und nimmt dabei Wärme davon auf. Das erwärmte Kühlmittel verlässt den zweiten WT 230. Die im zweiten WT 230 abgekühlte Prozessflüssigkeit 213 kann dann über Dosiervorrichtungen 272 den Berieselungsvorrichtungen 216, 217, 218, 219, 220 wieder zugeführt werden. Das Abkühlleitungssystem 296 ist als druckgeschlossenes System ausgebildet und wird mit einem Überdruck gegenüber dem Umgebungsdruck betrieben, beispielsweise mit einem Überdruck von 2·10⁵Pa.

In dem Abkühlleitungssystem 296 ist ein zweiter Bypass zu dem Verdampfer 8b der Wärmepumpe 8 vorgesehen, wobei der zweite Bypass nach der ersten Pumpe 271 und vor dem zweiten WT 230 vorgesehen ist. Die Prozessflüssigkeit 213 wird über eine zweite Dosiervorrichtung 241_2 zu dem Verdampfers 8b geleitet, darin abgekühlt, verlässt den Verdampfer 8b und wird dann über den Bypass zurückgeleitet, so dass die im Verdampfer 8b abgekühlte Prozessflüssigkeit 213 noch durch den zweiten WT 230 geleitet und dort weiter abgekühlt werden kann. Das Abkühlen der Prozessflüssigkeit 213 in dem Verdampfer 8b erfolgt durch die Übertragungsflüssigkeit, die in der Wärmepumpe 8 fließt. In der in Figur 2 dargestellten Ausführungsform entspricht die Prozessflüssigkeit 213 der zweiten Flüssigkeit 7.

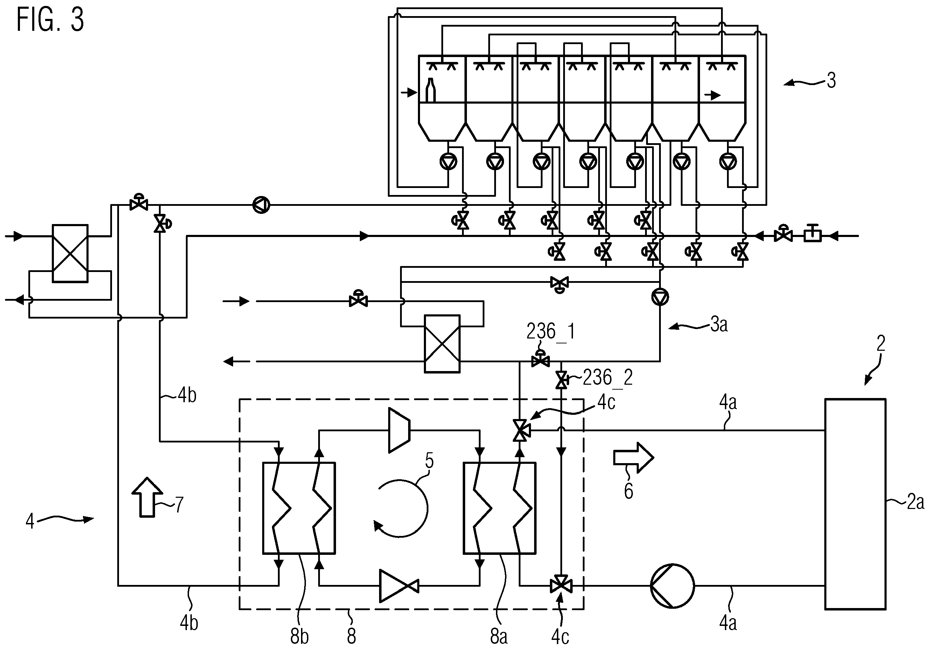

Wie die Figur 3 erkennen lässt, kann der Wärmetauschkreis 4 eine Umschalteinrichtung 4c (hier mit zwei geeignet steuerbaren Ventilen) umfassen für den kondensatorseitigen Anschluss der Wärmepumpe 8 wahlweise an die erste Seite 4a des Wärmetauschkreises 4 oder an einen Wärmekreislauf 3a des Pasteurs 3. Die Wärmepumpe 8 arbeitet im laufenden Nennbetrieb dann nur zur Versorgung des Pasteurs 3 mit Wärmeenergie und Kälteenergie. Die Umschalteinrichtung 4c ermöglicht es, Wärmeenergie stattdessen über die erste Seite 4a des Wärmetauschkreises 4 an die Waschmaschine 2 abzugeben und dort gegebenenfalls zu speichern, beispielsweise beim Leerfahren des Pasteurs 3, oder allgemein, wenn in diesem weniger oder keine Wärmeenergie benötigt wird.

In der gemäß Figur 3 gezeigten Ausführungsform umfasst das Anwärmleitungssystem 295 ferner einen ersten Bypass zu dem Kondensator 8a der Wärmepumpe 8. Der erste Bypass führt durch eine erste Dosiervorrichtung 36_2 zum Eingang des Kondensators 8a, durch den Kondensator 8a hindurch und zurück zu dem Anwärmleitungssystem 295. Der erste Bypass ist nach der zweiten Pumpe 259 und vor dem Eingang des ersten WT 231 angeordnet ist. Die Durchflussmenge von Prozessflüssigkeit 213 durch den ersten Bypass ist mittels der Dosiervorrichtung 36_2 steuerbar; dies ist sinnvoll, da die Wärmepumpe 8 nur eine begrenzte Heizleistung aufweist, auch wenn mehr Prozessflüssigkeit 213 durch sie hindurch geleitet werden würde. In der in Figur 3 gezeigten Ausführungsform entspricht die Prozessflüssigkeit einerseits der zweiten Flüssigkeit 7 und andererseits der ersten Flüssigkeit 6.

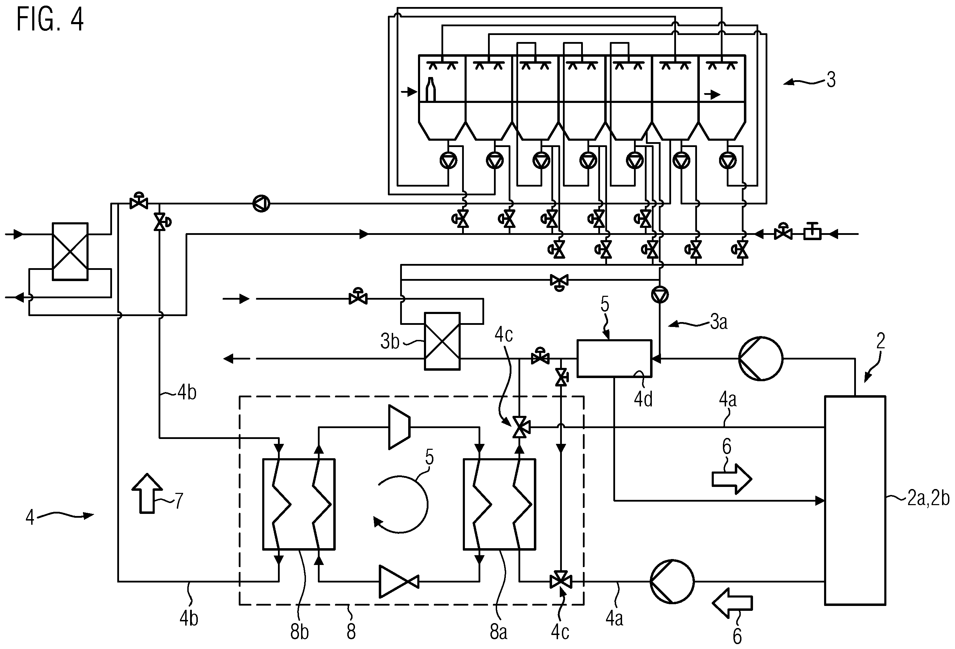

Wie die Figur 4 erkennen lässt, kann der Wärmetauschkreis 4 einen ersten Wärmetauscher 4d zum passiven Wärmetausch 5 von der Waschmaschine 2 an den Pasteur 3 umfassen. Über die erste Flüssigkeit 6 und den ersten Wärmetauscher 4d kann in der Waschmaschine 2 vorhandene und insbesondere durch Wärmetausch 5 zuvor gespeicherte Wärmeenergie an den Pasteur 3 abgegeben werden, wenn dort entsprechender Wärmebedarf besteht, beispielsweise beim Wiederanfahren nach einem Produktwechsel.

Hierbei ist es prinzipiell möglich, die erste Flüssigkeit 6 direkt in einen Wärmekreislauf 3a des Pasteurs 3 einzukoppeln, beispielsweise in Reihe mit einem darin vorhandenen zweiten Wärmetauscher 3b. Die erste Flüssigkeit 6 ist dann beispielsweise herkömmliches Brauchwasser.

Alternativ kann der erste Wärmetauscher 4d an einen zusätzlichen Sekundärkreis (nicht dargestellt) angeschlossen werden, der dann von der ersten Flüssigkeit 6 durchströmt wird, beispielsweise falls es sich bei dieser um eine Lauge handelt, die in einem separaten Kreislauf gefahren werden soll.

In der Figur 4 ist entsprechend angedeutet, dass anstelle eines von der ersten Flüssigkeit 6 durchströmten Laugebad-Erhitzers (Wärmetauschers) 2a beispielsweise ein Hauptlaugebad 2b der Waschmaschine 2 direkt in den Wärmetauschkreis 4 eingebunden sein kann, wobei es sich dann bei der ersten Flüssigkeit um Hauptlauge handelt.

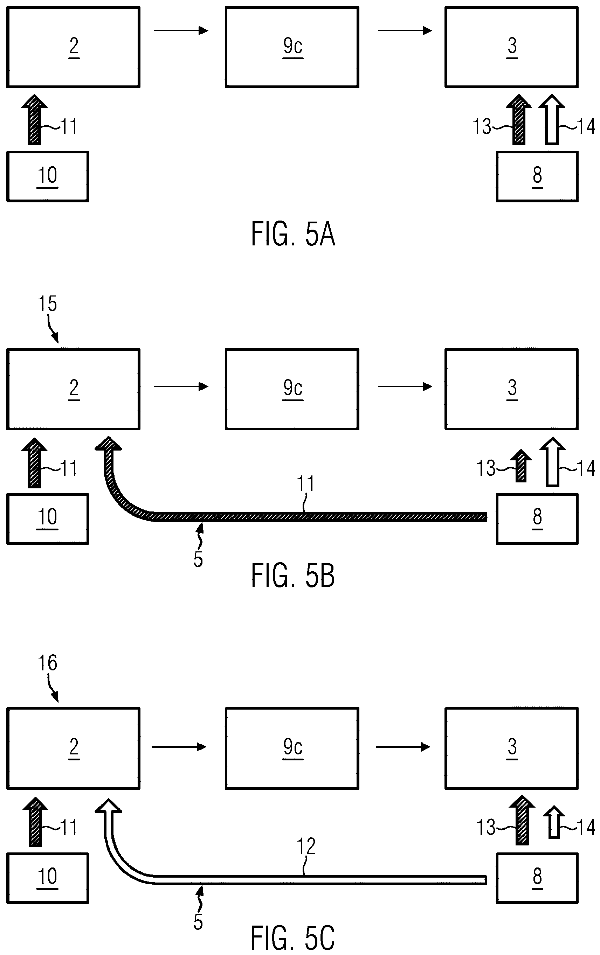

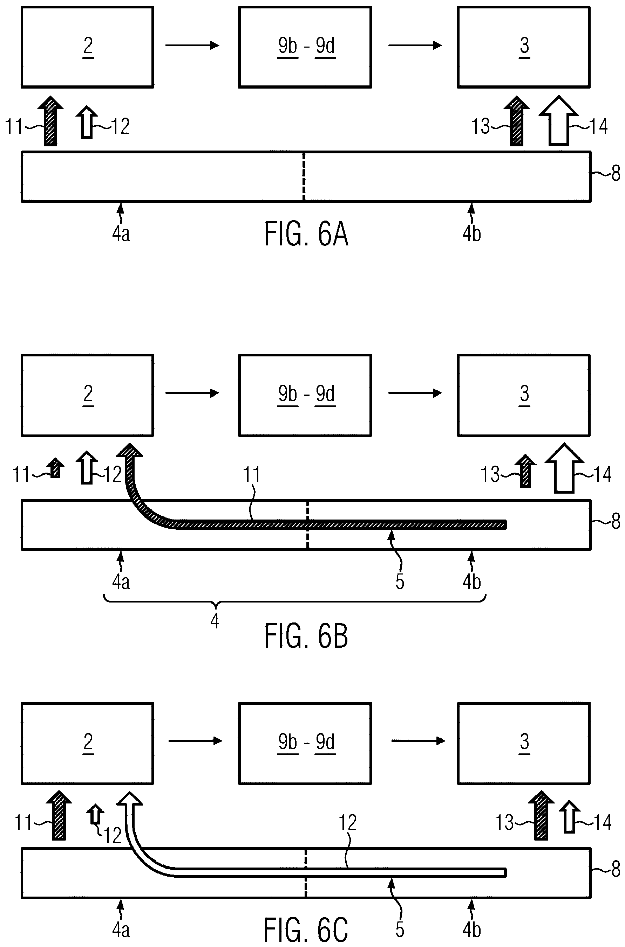

Die Figuren 5A bis 5C und 6A bis 6C verdeutlichen schematisch Beispiele für die Wärme- und Kälteversorgung der Waschmaschine 2 und des Pasteurs 3 mittels der wenigstens einen in den Wärmetauschkreis 4 integrierten Wärmepumpe 8 (erste und zweite Flüssigkeit 6, 7 jeweils nicht bezeichnet). Schematisch dargestellt ist u. a. ferner eine separate Wärmequelle 10 zur Wärmeversorgung 11 der Waschmaschine 2.

In den Figuren 5A bis 5C und 6A bis 6C sind zudem die Kälteversorgung 12 der Waschmaschine 2, die Wärmeversorgung 13 des Pasteurs 3 und die Kälteversorgung 14 des Pasteurs 3 schematisch durch Blockpfeile symbolisiert, deren Größe (nur als Anhaltspunkt und nicht maßstäblich) die Intensität der jeweiligen Wärmeversorgung 11, 13 und Kälteversorgung 12, 14 angibt.

Bei der Ausführungsform gemäß Figur 5A bis 5C dient die Wärmepumpe 8 im Nennbetrieb, der in der Figur 5A angedeutet ist, ausschließlich der Wärmeversorgung 13 und der Kälteversorgung 14 des Pasteurs 3, siehe hierzu beispielhaft auch die Figur 3. Für gleichzeitige Wärmeversorgung 11 der Waschmaschine 2 im Nennbetrieb ist die separate Wärmequelle 10 zuständig.

Dagegen kann die Wärmepumpe 8 bei der Ausführungsform gemäß Figur 6A bis 6C im Nennbetrieb, der in der Figur 6A angedeutet ist, sowohl zur Wärme- und Kälteversorgung 11, 12 der Waschmaschine 2, als auch zur Wärme- und Kälteversorgung 13, 14 des Pasteurs 3 eingesetzt werden. Dies kann beispielsweise durch geeignete Verschaltung der ersten und zweiten Seite 4a, 4b des Wärmetauschkreises 4 an der Kondensatorseite bzw. Verdampferseite der Wärmepumpe 8 erzielt werden, beispielsweise in Anlehnung an die Figur 3 oder 4.

Die Figuren 5B und 6B zeigen jeweils schematisch eine zusätzliche Wärmeversorgung 11 der Waschmaschine 2 und eine Kälteversorgung 14 des Pasteurs 3 jeweils durch Wärmetausch 5 in der Wärmepumpe 8, beispielsweise falls der Pasteur 3 für eine Außerbetriebnahme bzw. einen Produktwechsel leer gefahren wird. In diesem Fall wirkt die Waschmaschine 2 als Wärmesenke 15 für die Wärmepumpe 8 und mittelbar auch für den Pasteur 3, der folglich über die im Wärmetauschkreis 4 zirkulierende zweite Flüssigkeit 7 gekühlt werden kann, beispielsweise um eine im Nennbetrieb vorhandene und beim Leerfahren vorübergehend fehlende Kühlwirkung durch zugeführte Flaschen auszugleichen.

Die Figuren 5C und 6C zeigen jeweils schematisch eine zusätzliche Kälteversorgung 12 der Waschmaschine 2 und eine Wärmeversorgung 13 des Pasteurs 3 jeweils durch Wärmetausch 5 in der Wärmepumpe 8, beispielsweise beim Wiederanfahren des Pasteurs 3 nach einem Produktwechsel. Die Waschmaschine 2 wirkt dann als Wärmequelle 16 für die Wärmepumpe 8 und mittelbar auch für den Pasteur 3, der somit über die im Wärmetauschkreis 4 zirkulierende zweite Flüssigkeit 7 zum anfänglichen Aufheizen stärker erwärmt werden kann.

Anders gesagt wird durch den Wärmetausch 5 die erste Flüssigkeit 6 beim Leerfahren des Pasteurs 3 erwärmt und die zweite Flüssigkeit 7 gleichzeitig abgekühlt, beim Wiederanfahren des Pasteurs 3 wird dann die erste Flüssigkeit 6 abgekühlt und die zweite Flüssigkeit 7 erwärmt.

Vorteilhaft ist, dass in der Waschmaschine 2 relativ große Volumina von Prozessflüssigkeiten vorgehalten werden und ein regulärer Betrieb der Waschmaschine 2 innerhalb relativ großer Temperaturbereiche der Prozessflüssigkeiten möglich ist. Als derartige Prozessflüssigkeit und gegebenenfalls auch als erste Flüssigkeit 6 eignet sich besonders eine in der Waschmaschine 2 zirkulierende Lauge, beispielsweise die jeweilige Hauptlauge, prinzipiell aber auch Spritzwasser.

Die hier vorzugsweise verwendete Prozessflüssigkeit und insbesondere erste Flüssigkeit 6 ist die durch ein Hauptlaugebad 2b (siehe Figur 4) der Waschmaschine 2 strömende Hauptlauge. Das Hauptlaugebad 2b hat beispielsweise ein Fassungsvermögen von wenigstens 20 m³ und insbesondere wenigstens 40 m³. Die tatsächliche Arbeitstemperatur der Hauptlauge zur Behandlung der Leerflaschen darf in der Regel von der jeweiligen Nenntemperatur relativ stark abweichen. Beispielsweise ist eine diesbezügliche Übertemperatur von bis zu 10 K und/oder entsprechende Untertemperatur von bis zu 10 K zulässig. Die jeweilige Nenntemperatur der Hauptlauge kann beispielsweise zwischen 60 und 85°C liegen.

Somit kann die Waschmaschine 2 als Wärmespeicher oder Kältespeicher für den hinsichtlich seines Temperaturverhaltens relativ kritischen Pasteur 3 arbeiten und ermöglicht dabei zudem eine relativ große Speicherkapazität. Einzelne Behandlungstemperaturen im Pasteur 3 können demzufolge auch bei Lastwechseln genau und zuverlässig eingehalten werden, um letztlich für die Flaschen im Pasteur 3 eine Soll-Behandlungsstärke (Pasteurisierungseinheiten) einzuhalten. Demgegenüber ist die Behandlungstemperatur der Leerflaschen bei deren Reinigung vergleichsweise unkritisch und kann daher zu Speicherzwecken in der beschriebenen Weise variieren.

Mit dem beschriebenen Wärmetausch 5 kann auf Seiten des Pasteurs 3 beispielsweise eine bestimmte Pasteurisierungszone zur Pasteurisierung der Flaschen und/oder eine Auslaufzone zur Kühlung der unmittelbar zuvor pasteurisierten Flaschen gezielt erwärmt und/oder gekühlt werden. Solche Behandlungszonen mit Kreisläufen zugehöriger Prozessflüssigkeiten sind in den Figuren 2 bis 4 schematisch angedeutet.

Beim Leerfahren der Abfülllinie 1 kann die Waschmaschine 2 bis zu einem geeigneten Temperaturunterschied zwischen der ersten und zweiten Flüssigkeit 6, 7 auch direkt als Wärmesenke 15 für den Pasteur 3 arbeiten.

Die Waschmaschine 2 kann je nach Betriebszustand der Abfülllinie 1 als Wärmesenke 15 oder Wärmequelle 16 für die Wärmepumpe 8 arbeiten. Entsprechend arbeitet die Waschmaschine 2 dann entweder als Wärmespeicher oder Kältespeicher.

Prinzipiell ist es auch denkbar, dass die Waschmaschine 2 nur als Wärmesenke 15 für die Wärmepumpe 8 arbeitet. Die dabei aufgenommene Wärmeenergie führt im Sinne eines Wärmeüberschusses zunächst zu einer Übertemperatur der jeweiligen Prozessflüssigkeit (gegebenenfalls die erste Flüssigkeit 6 und/oder die Hauptlauge), wobei die Übertemperatur im Arbeitsbetrieb der Waschmaschine 2 in dieser sukzessive abgebaut werden kann.

Im Arbeitsbetrieb der Abfüllanlage 1 ist es beispielsweise denkbar, dass aufgrund eines Produktwechsels und/oder einer längeren Produktionsunterbrechung zunächst der Bedarf entsteht, den Pasteur 3 zusätzlich zu kühlen, da beim Leerfahren des Pasteurs 3 Kühlleistung durch die dann eingangsseitig nicht mehr zugeführten Flaschen fehlt. Beim Wiederanfahren des Pasteurs 3 muss dieser dann wieder geheizt werden, wofür der Wärmetausch 5 ebenso eingesetzt werden kann. Das heißt, beim Leerfahren des Pasteurs 3 kühlt die Wärmepumpe 5 zuerst in den Pasteur 3 und gibt dabei Wärme an die Waschmaschine 2 ab. Wenn wieder Wärme im Pasteur 3 benötigt wird, läuft der Wärmetausch 5 in umgekehrter Richtung.

Dadurch kann vorübergehend überschüssige Wärme-/ Kälteenergie an anderer Stelle und/oder zu einem späteren Zeitpunkt effizient genutzt werden.

Prinzipiell ist es auch möglich, die Funktion der Waschmaschine 2 als Wärmespeicher oder Kältespeicher auch mit anderen Wärme-/ Kälteverbrauchern der Abfülllinie 1 zu kombinieren.

Die Verwendung der Waschmaschine 2 als Wärmesenke 15 ermöglicht einen besonders flexiblen und effizienten Einsatz der Wärmepumpe 8.

Auch im Nennbetrieb der Abfülllinie 1 kann die Wärmepumpe 8 zum einen als Wärmesenke 15 und zum anderen als Wärmequelle 16 für die Waschmaschine 2 arbeiten, und entsprechend dann als Wärmequelle bzw. Wärmesenke für den Pasteur 3. Dies ermöglicht einen vergleichsweise gleichmäßigen und im Wesentlichen kontinuierlichen Betrieb der Wärmepumpe 8, wodurch deren mechanische Belastung im Dauerbetrieb minimiert und der Instandhaltungsbedarf entsprechend reduziert werden kann.

Prinzipiell ist es zudem denkbar, den Wärmetauschkreis 4 mit wenigstens zwei Wärmepumpen auszustatten, beispielsweise um einen zweistufigen Wärmepumpenbetrieb zu ermöglichen (nicht dargestellt). Hierfür könnte beispielsweise eine im Nennbetrieb ausschließlich dem Pasteur 3 zugeordnete Wärmepumpe vorhanden sein, um einzelne Behandlungszonen des Pasteurs 3 zu kühlen und zu heizen. Zusätzlich könnte dann die Wärmepumpe 8 zwischen der ersten und zweiten Seite 4a, 4b des Wärmetauschkreises 4 geschaltet sein, um einen Wärmetausch 5 zwischen der ersten und zweiten Flüssigkeit 6, 7 zu ermöglichen.

Die Wärmepumpe 8 kann zu diesem Zweck mit prinzipiell bekannten Kältemitteln arbeiten, um einen geeigneten Temperaturbereich des Wärmetauschs 5 abzudecken.

## Patentansprüche

1. Abfülllinie (1) mit einer Waschmaschine (2) zum Reinigen leerer Flaschen, einem Pasteur (3) zum Pasteurisieren mit einem flüssigen Produkt gefüllter Flaschen und einem Wärmetauschkreis (4), der die Waschmaschine und den Pasteur zum Wärmetausch (5) zwischen einer ersten Flüssigkeit (6) zur Wärme- und/oder Kälteversorgung (11, 12) der Waschmaschine und einer zweiten Flüssigkeit (7) zur Wärme- und/oder Kälteversorgung (13, 14) des Pasteurs verbindet.

2. Abfülllinie nach Anspruch 1, wobei der Wärmetauschkreis (4) wenigstens eine Wärmepumpe (8) für den Wärmetausch (5) umfasst.

3. Abfülllinie nach Anspruch 2, wobei der Wärmetauschkreis (4) derart verschaltet ist, dass die Wärmepumpe (8) im Nennbetrieb der Abfülllinie Wärmeenergie und Kälteenergie wahlweise nur für den Pasteur (3) oder im Austausch zwischen Waschmaschine (2) und Pasteur (3) bereitstellen kann.

4. Abfülllinie nach einem der vorigen Ansprüche, wobei der Wärmetauschkreis (4) derart verschaltet ist, dass die Waschmaschine (2) als Wärmesenke (15) für den Pasteur (2) oder eine in den Wärmetauschkreis (4) integrierte Wärmepumpe (8) arbeiten kann.

5. Abfülllinie nach Anspruch 4, wobei der Wärmetauschkreis (4) ferner derart verschaltet ist, dass die Waschmaschine (2) als Wärmquelle (16) für den Pasteur (3) oder eine in den Wärmetauschkreis integrierte Wärmepumpe (8) arbeiten kann.

6. Abfülllinie nach wenigstens einem der vorigen Ansprüche, wobei die Waschmaschine (2) ein von der ersten Flüssigkeit (6) durchströmtes oder mittels Wärmetauscher (2a) an diese gekoppeltes Hauptlaugebad (2b) aufweist.

7. Abfülllinie nach Anspruch 6, wobei das Hauptlaugebad (2b) ein Speichervolumen von wenigstens 20 m³ aufweist und bezüglich einer Nenntemperatur zur Behandlung der Leerflaschen zu deren entsprechender Behandlung bis zu einer Übertemperatur von maximal 10 K, insbesondere maximal 5 K, und/oder bis zu einer Untertemperatur von maximal 10 K, insbesondere maximal 5 K, konfiguriert ist.

8. Abfülllinie nach wenigstens einem der vorigen Ansprüche, wobei der Pasteur (3) eine von der zweiten Flüssigkeit (7) durchlaufene Pasteurisierungszone zur Pasteurisierung der Flaschen oder Auslaufzone zu deren anschließender Kühlung aufweist.

9. Verfahren zur Wärme- und/oder Kälteversorgung einer Waschmaschine (2) zum Reinigen leerer Flaschen und eines Pasteurs (3) zum Pasteurisieren von mit einem flüssigen Produkt befüllten Flaschen in einer Abfülllinie (1), wobei man eine die Waschmaschine mit Wärme- und/oder Kälteenergie versorgende erste Flüssigkeit (6) durch eine erste Seite (4a) eines Wärmetauschkreises (4) sowie eine den Pasteur mit Wärme- und/oder Kälteenergie versorgende zweite Flüssigkeit (7) durch eine zweite Seite (4b) des Wärmetauschkreises führt und in diesem Wärme zwischen der ersten und zweiten Flüssigkeit austauscht.

10. Verfahren nach Anspruch 9, wobei man die Wärme zumindest anteilig mittels einer in den Wärmetauschkreis (4) integrierten und insbesondere dessen erste und zweite Seite (4a, 4b) thermisch koppelnden Wärmepumpe (8) austauscht.

11. Verfahren nach Anspruch 10, wobei die Wärmepumpe (8) Wärmeenergie und Kälteenergie im Nennbetrieb der Abfülllinie (1) wahlweise nur für die Waschmaschine (2), nur für den Pasteur (3) oder im Austausch zwischen Waschmaschine und Pasteur bereitstellt.

12. Verfahren nach einem der Ansprüche 9 bis 11, wobei die Waschmaschine (2) bei Leerfahren der Abfülllinie (1) vom Pasteur (3) übertragene Wärmeenergie aufnimmt und speichert, und wobei derart gespeicherte Wärmeenergie bei/nach Wiederanfahren der Abfülllinie an den Pasteur abgegeben und/oder in der Waschmaschine verbraucht wird.

13. Verfahren nach wenigstens einem der Ansprüche 9 bis 12, wobei die erste Flüssigkeit (6) ein Hauptlaugebad (2b) mit einem Fassungsvermögen von wenigstens 20 m³ durchströmt oder an ein solches mittels Wärmetausch gekoppelt ist, und/oder wobei die zweite Flüssigkeit (7) eine Pasteurisierungszone zur Pasteurisierung der Flaschen oder eine Auslaufzone zur Kühlung unmittelbar zuvor pasteurisierter Flaschen durchläuft.

14. Verfahren nach wenigstens einem der Ansprüche 9 bis 13, wobei eine Prozessflüssigkeit, insbesondere eine Hauptlauge, der Waschmaschine (2) im Nennbetrieb der Abfülllinie (1), beim Leerfahren der Abfülllinie und/oder beim Wiederanfahren der Abfülllinie über den Wärmetauschkreis (4) als Wärmespeicher oder Kältespeicher für den Pasteur (3) verwendet wird und der Wärmetauschkreis (4) beim Speichern derart geregelt wird, dass sich die Prozessflüssigkeit gegenüber einer Nenntemperatur zur Behandlung der Leerflaschen auf eine Übertemperatur von maximal 10 K, insbesondere maximal 5 K, erwärmt und/oder auf eine Untertemperatur von maximal 10 K, insbesondere maximal 5 K, abkühlt.

15. Verfahren nach Anspruch 14, wobei die Übertemperatur oder Untertemperatur der Prozessflüssigkeit im Betrieb der Abfülllinie (1) abgebaut wird durch: lokale Behandlung der Leerflaschen mit der Prozessflüssigkeit; Wärmetausch (5) mit der zweiten Flüssigkeit (7) und deren Verwendung im Pasteur (3); und/oder Wärmetausch mit einer dritten Flüssigkeit, die Wärme oder Kälte zu einem anderen Verbraucher oder Speicher innerhalb der Abfülllinie transportiert.
